# DEMANDE DE BREVET EUROPEEN

(11) **EP 4 667 429 A1**
(43) Date de publication de la demande: **24.12.2025**
(21) Numéro de dépôt: 25183204.4
(22) Date de dépôt: 17.06.2025
(51) Int. Cl.: C03C 1/00, C03B 19/04, C03B 37/04, C03C 3/087, C03C 13/06

(54) **FUSION ET FIBRAGE DE CALCIN COMPRENANT DES RÉSIDUS MÉTALLIQUES**

(30) Priorité: 20.06.2024 FR 2406651
(71) Demandeur: Saint-Gobain Isover, 92400 Courbevoie (FR)
(72) Inventeur: LOPEPE, Frederic, 92400 Courbevoie (FR)
(74) Mandataire: Saint-Gobain Recherche

(57) **Abrégé**

La présente invention concerne une composition de matières premières adaptée pour être fondue et fibrée par centrifugation externe pour l'obtention d'une laine minérale, caractérisée en ce qu'elle comprend de 1 à 99% en masse d'un calcin comprenant une fraction verre et 0,001 à 20 % en masse de résidus métalliques. La présente invention concerne également un procédé de production d'un verre utilisant une telle composition de matières premières, ainsi que le verre obtenu par un tel procédé. La présente invention concerne également un procédé de fabrication d'une laine minérale utilisant une telle composition de matières premières, ainsi qu'une laine minérale obtenue par un tel procédé.

## Description

La présente invention concerne une composition de matières premières adaptée pour être enfournée dans un four verrier, fondue, puis fibrée par centrifugation externe, comprenant du calcin comprenant des résidus métalliques. Sont également concernés les procédés de fusion et de fibrage par centrifugation externe de cette composition, ainsi qu'un verre et une laine minérale obtenus par ces procédés.

Il est connu de « recycler » du calcin en le faisant fondre dans un four verrier en vue de former de nouveau un verre, ou de le fibrer. Parmi les nombreux avantages d'un tel recyclage de calcin, on compte notamment l'amélioration du rendement énergétique du four verrier, le mélange de matières premières comprenant le calcin étant plus facile à fondre qu'une composition « classique » de matières premières comprenant entre autres de grandes quantités de silice.

Toutefois, selon son origine, le calcin peut présenter des impuretés qui rendent difficile voire impossible le recyclage en four verrier classique. C'est le cas notamment des calcins comprenant des impuretés métalliques. Les équipements en métal des fours verriers classiques, par exemple les thermocouples en platine, ne sont en effet pas compatibles avec les impuretés métalliques présents dans de tels calcins. En outre, en conditions oxydantes, les éléments métalliques peuvent réduire les oxydes présents dans le mélange vitrifiable et ainsi affecter la qualité du verre final, notamment sa transparence. Par ailleurs, les éléments métalliques peuvent, par densité, être piégés en fond de cuve du four et générer une couche conductrice pouvant soit user rapidement les réfractaires soit être relargués avec la production, générant alors des défauts ou des casses-machines.

Parmi les calcins comprenant des impuretés métalliques, on peut citer le calcin photovoltaïque. Ce dernier, issu des panneaux photovoltaïques usagés, est pollué par des éléments métalliques constitutifs des cellules photosensibles, tels que le silicium, de polluants métalliques classiques tels que l'aluminium, ou encore d'éléments métalliques issus des composants utilisés dans les technologies à couches minces, tels que le tellure, le cadmium, l'indium ou l'argent. A l'heure actuelle, les différents composants des panneaux photovoltaïques sont séparés les uns des autres, puis recyclés individuellement. C'est un processus complexe et coûteux. Le verre armé, qui est un verre coulé autour d'une armature métallique, généralement en acier, est également difficile à recycler.

Ainsi, il subsiste un réel besoin de mettre au point un procédé de fusion permettant le recyclage d'un calcin comprenant des résidus métalliques.

### RESUME DE L'INVENTION

Dans ce contexte, les inventeurs ont mis au point un procédé permettant de recycler les calcins comprenant des résidus métalliques, et ce en intégrant de tels calcins dans des compositions de matières premières pouvant être fondues dans un four configuré pour stratifier les matières premières en fusion par leur densité, et configuré pour soutirer par sa partie basse les matières premières en fusion les plus denses, incluant donc les résidus métalliques. Ce type de four est particulièrement efficace pour fondre des compositions de matières premières adaptées au fibrage par centrifugation externe.

Les inventeurs ont montré que le recyclage d'un calcin comprenant des résidus métalliques, qui sont donc sous forme réduite, dans ce type de four était possible malgré les changements de viscosité et de chimie du mélange que de tels composants réduits peuvent causer.

En plus de permettre la réutilisation de calcins habituellement difficiles à recycler, la solution proposée par cette invention présente également l'avantage d'être économique et écologique. En effet, les laines minérales sont habituellement fabriquées à partir de matières premières naturelles, telles que le feldspath, la dolomie et la chaux, qui sont coûteuses et/ou émettrices de CO2 et/ou pénalisant le rendement matière de fusion de la composition verrière. L'utilisation de calcins permet donc de réduire l'utilisation de ces matières premières. Les plus faibles quantités de CO2 et d'eau émises au cours de la fabrication de la laine minérale utilisant ces calcins, permettent en outre d'améliorer le rendement de matière, c'est-à-dire le rapport entre la quantité de matières premières introduite et la quantité de verre fondu obtenu à l'issue de la fusion de la composition de matières premières. L'utilisation de calcins permet également de diminuer l'énergie nécessaire à la fusion de la composition de matières premières.

Ainsi la présente invention concerne une composition de matières premières adaptée pour être fondue et fibrée par centrifugation externe pour l'obtention d'une laine minérale, caractérisée en ce qu'elle comprend de 1% à 99% en masse d'un calcin comprenant :
- une fraction verre et
- 0,001 à 20 % en masse de résidus métalliques.

Dans certains modes de réalisation, la composition de matières premières comprend de 2 à 70 %, de préférence de 2% à 50 %, voire même de 4 à 20%, ou encore de 5 à 15%, en masse dudit calcin.

Dans certains modes de réalisation, la composition de matières premières comprend au moins 0,08% en masse, de préférence de 0,08 à 7%, mieux encore de 0,1 à 5% en masse de résidus métalliques, par rapport au poids total de la composition de matières premières.

Dans certains modes de réalisation, la fraction verre dudit calcin a une composition chimique comprenant, en pourcentage massique :
- SiO2 : de 50 à 80%,
- Na2O: de 3 à 20%,
- CaO: de 3 à 20%,
- MgO : de 0 à 10%,
- Al2O3 : de 0 à 5%,
- K2O : de 0 à 10%, et
- Fe2O3 : de 0 à 15%.

Dans certains modes de réalisation, ledit calcin comprend de 0,01 à 20 %, de préférence de 0,1 à 20%, en masse de résidus métalliques.

Dans certains modes de réalisation, ledit calcin comprend de 0,01 à 15 %, par exemple de 0,1 % à 10%, voire 1 à 4 %, en masse de résidus métalliques.

Dans certains modes de réalisation, les résidus métalliques comprennent un ou plusieurs éléments choisis parmi : Si, Al, Fe, Te, Cd, In, Cu, Pb, Ta, Ag, Sc, Y, et un lanthanide.

Dans certains modes de réalisation, ledit calcin a une perte au feu, après séchage, de 0,001% à 20 %.

Dans certains modes de réalisation, ladite laine minérale présente une composition chimique comprenant, en pourcentages massiques :
SiO2 : 30 à 75%,
Al2O3 : 0 à 30%,
CaO+MgO : 5 à 45%,
Na2O+K2O : 0 à 20%,
Fe2O3 : 0 à 20%,
B2O3 : 0 à 14%.

Dans certains modes de réalisation, ladite laine minérale présente une composition chimique comprenant, en pourcentages massiques :
SiO2 : 30 à 50%,
Al2O3 : 10 à 24%,
CaO+MgO : 20 à 45%,
Fe2O3 : 0 à 20%,
Na2O+K2O : 0 à 10%, et
B2O3 : 0 à 1%.

Dans certains modes de réalisation, ledit calcin est sous forme d'un composite conformé formé à partir d'un mélange comprenant :
- de 1 à 99 %, de préférence de 1 à 25 %, voire de 5 à 20%, en masse dudit calcin comprenant de 0,001 à 20 % en masse de résidus métalliques,
- de 1 à 40 %, de préférence de 2 à 20 %, voire de 10 à 20%, en masse d'un liant, et
- de 0 à 98 %, de préférence de 55 à 97 %, voire de 60 à 85%, en masse de charges minérales, par rapport au poids total sec dudit mélange.

La présente invention concerne également un procédé de production d'un verre comprenant les étapes suivantes :
a) l'alimentation d'une enceinte de fusion avec une composition de matières premières telle que définie dans la présente demande, en tant que charge vitrifiable, et
b) la fusion de ladite composition de matières premières dans ladite enceinte de fusion, pour obtenir un bain de matière fondue.

Dans certains modes de réalisation du procédé de production d'un verre, l'enceinte de fusion est un four vertical configuré pour stratifier les matières premières en fusion, en fonction de leur densité. De préférence, l'enceinte de fusion est un four cubilot.

Un autre objet de la présente invention est un verre obtenu par le procédé de production tel que défini dans la présente demande.

Un autre objet de la présente invention est un procédé de fabrication d'une laine minérale, comprenant les étapes suivantes :
a) l'alimentation d'une enceinte de fusion avec une composition de matières premières telle que définie dans la présente demande, en tant que charge vitrifiable,
b) la fusion de ladite composition de matières premières dans ladite enceinte de fusion, pour obtenir un bain de matière fondue, et
c) le fibrage dudit bain de matière fondue.

Dans certains modes de réalisation du procédé de fabrication d'une laine minérale, l'enceinte de fusion est un four vertical configuré pour stratifier les matières premières en fusion, en fonction de leur densité. De préférence, l'enceinte de fusion est un four cubilot.

Un autre objet de la présente invention est une laine minérale obtenue par le procédé de fabrication tel que défini dans la présente demande.

### DESCRIPTION DETAILLEE

La composition de matières premières selon l'invention est adaptée pour être fondue et fibrée par centrifugation externe en vue de l'obtention d'une laine minérale.

Au sens de l'invention, une composition de matières premières est adaptée pour être fibrée par centrifugation externe dès lors que la température (TLog1) du bain de verre, pour une viscosité dynamique Log 1, est comprise entre 1390 °C et 1490 °C, et que la différence (TLog1 - Tlog3) entre les températures correspondant aux valeurs de viscosités Log 1 et Log 3 est comprise entre 320 °C et 390 °C. De manière connue dans le domaine de la fusion du verre, la viscosité dynamique s'exprime en N Log Poises, ce qui correspond à 10N Poises (0,1 Pa.s), chaque valeur de viscosité correspondant à une température donnée du bain de verre. La viscosité dynamique peut être mesurée à l'aide d'un viscosimètre adapté au verre. La viscosité dynamique peut également être déterminée par calcul, notamment à partir du modèle de Fluegel (A. Fluegel, « Glass Viscosity Calculation Based on a Global Statistical Modeling Approach », Glass Technol. : Europ. J. Glass Sci. Technol. A, vol. 48, 2007, no. 1, p 13-30).

Une laine minérale est caractérisée par un enchevêtrement de fibres discontinues, ce qui la distingue de fibres continues généralement destinées au renfort de matières organiques ou inorganiques (par exemple le ciment).

Au sens de l'invention, une laine minérale présente une composition chimique comprenant les constituants suivants :
SiO2 : 30 à 75% en masse,
Al2O3 : 0 à 30% en masse,
CaO+MgO : 5 à 45% en masse,
Na2O+K2O : 0 à 20% en masse,
Fe2O3 : 0 à 20% en masse,
B2O3 : 0 à 14% en masse.

L'appellation laine de roche fait généralement référence à des laines minérales présentant des fibres dont la composition chimique comprend les constituants suivants :
SiO2 : 30 à 50% (par exemple 40 à 48%) en masse,
Al2O3 : 10 à 24% (par exemple 14 à 21 %) en masse,
CaO+MgO : 20 à 45% (par exemple 24 à 33%) en masse,
Fe2O3 : 0 à 20% (par exemple 5 à 12%) en masse,
Na2O+K2O : 0 à 10% (par exemple 2 à 9%) en masse,
B2O3 : 0 à 1% en masse.

Par contraste, l'appellation laine de verre fait généralement référence à des laines minérales présentant des fibres dont la composition chimique comprend les constituants suivants :
i) pour les laines de verre dites basse alumine :
   SiO2 : 50 à 75% en masse,
   Al2O3 : 0 à 8% en masse,
   CaO+MgO : 5 à 20% en masse,
   Fe2O3 : 0 à 3% en masse,
   Na2O+K2O : 6 à 20% en masse,
   B2O3 : 0 à 14% en masse ;
ii) pour les laines de verre dites haute alumine :
   SiO2 : 35 à 55% en masse,
   Al2O3 : 16 à 27% en masse,
   CaO+MgO : 3 à 30% en masse, de préférence 3 à 19% en masse,
   Fe2O3 : 0 à 15% en masse,
   Na2O+K2O : 5 à 17% en masse, de préférence de 11 à 17% en masse,
   B2O3 : 0 à 5% en masse.

Dans la présente demande, les compositions sont exprimées sous forme d'oxyde par convention. En particulier, si l'on exprime la teneur (totale) en oxyde de fer sous la forme Fe2O3, cela ne signifie pas que cet oxyde de fer est nécessairement et exclusivement présent sous la forme ferrique. L'oxyde de fer peut être présent à la fois sous ses formes ferrique (Fe2O3) et ferreuse (FeO), et c'est par pure convention que l'on désigne par Fe2O3 la teneur totale en oxyde de fer.

De préférence, la somme des concentrations massiques en SiO2, Al2O3, CaO, MgO, Fe2O3, Na2O, et K2O dans la composition de matières premières selon l'invention, dans les compositions de calcin (i.e. de fraction verre de calcin), et dans les compositions de laine décrites dans la présente demande est supérieure ou égale à 90%, voire supérieure ou égale à 95%.

Il est bien entendu que les compositions de calcins et laines minérales décrites dans la présente demande peuvent comprendre d'autres oxydes, en général présents à l'état de traces, tels que MnO, P2O5 ou TiO2.

Le procédé de fibrage par centrifugation externe est bien connu de la personne du métier. Dans ce procédé, la matière à fibrer est déversée à l'état fondu sur la bande périphérique de roues de centrifugation mues en rotation, est accélérée par ces roues, s'en détache, et est transformée pour partie en fibres sous l'effet de la force centrifuge, un courant gazeux étant émis tangentiellement à la bande périphérique des roues de manière à prendre en charge la matière fibrée en la séparant de la matière non fibrée et à l'acheminer vers un organe récepteur. On peut par exemple se reporter, pour le fibrage par centrifugation externe, à la demande de brevet EP195725.

Le procédé de fibrage par centrifugation externe est couramment utilisé pour produire la laine de roche.

Le procédé de fibrage par centrifugation externe est à distinguer du procédé de fibrage par centrifugation interne. Ce dernier consiste à introduire un filet de la matière étirable à l'état fondu dans un centrifugeur, encore appelé assiette de fibrage, tournant à grande vitesse. Une telle assiette de fibrage peut alternativement être équipée ou non d'un fond et est percée à sa périphérie par un très grand nombre d'orifices par lesquels la matière est projetée sous forme de filaments sous l'effet de la force centrifuge. Au moyen d'un brûleur de forme annulaire, ces filaments sont alors soumis à l'action d'un courant annulaire gazeux d'étirage à température et vitesse élevées (pouvant atteindre 1000°C voire 1200 °C pour la température, et 250 m/s pour la vitesse, en fonction du produit souhaité) longeant la paroi du centrifugeur qui les amincit et les transforme en fibres. Un tel procédé est décrit dans les demandes de brevet EP 0189354 ou EP 0519797.

Le procédé de fibrage par centrifugation externe est couramment utilisé pour produire la laine de verre basse ou haute alumine.

De manière préférée, la composition de matières premières selon l'invention est adaptée pour être fondue et fibrée par centrifugation externe pour l'obtention d'une laine de roche.

La composition de matières premières selon l'invention comprend de 1% à 99% en masse d'un calcin comprenant une fraction verre et de 0,001 à 20 % en masse de résidus métalliques. Ledit « calcin comprenant une fraction verre et de 0,001 à 20 % en masse de résidus métalliques » est également appelé dans la présente demande « calcin à résidus métalliques », par souci de simplification et clarté.

Typiquement, la composition de matières premières selon l'invention comprend de 2 à 70 %, de préférence de 2% à 50 %, voire même de 4 à 20%, ou encore de 5 à 15%, en masse dudit calcin à résidus métalliques.

Typiquement, la teneur en lesdits résidus métalliques (i.e. provenant dudit calcin à résidus métalliques) est d'au moins 0,08% en masse (par exemple de 0,08 à 7 % en masse, voire de 0,08 à 5% en masse), de préférence d'au moins 0,1% en masse (par exemple de 0,1 à 7 % en masse, voire de 0,1 à 5% en masse), par rapport au poids total de la composition de matières premières.

Ledit calcin à résidus métalliques comprend typiquement une fraction verre et des résidus métalliques distincts de cette fraction verre.

Ledit calcin à résidus métalliques peut par exemple être un calcin de panneaux ou cellules photovoltaïques, un calcin de verre armé, un calcin de verre automobile (e.g. pare-brise à fils métalliques chauffants), un calcin de verre décoré, un calcin de verre de miroir, un calcin de laine minérale avec armature ou surfaçage métallique (e.g. surfaçage aluminium), ou un mélange de ceux-ci.

Le calcin à résidus métalliques a en général un d50 de 1 à 150 mm, par exemple de 1 à 40 mm, de 5 à 15 mm, de 40 à 150 mm ou de 80 à 120 mm. Dans certains modes de réalisation, le d50 du calcin à résidus métalliques est de 40 à 150 mm, de préférence de 80 à 120 mm. Dans d'autres modes de réalisation, le d50 du calcin à résidus métalliques est de 1 à 40 mm, de préférence de 5 à 15 mm.

Le d50 indique la valeur pour laquelle 50% des particules - en nombre - ont une taille inférieure ou égale à cette valeur, et 50% des particules - en nombre - ont une taille supérieure à cette valeur. Le d50 peut être déterminé par granulométrie laser. La « taille » d'une particule fait référence au diamètre de Féret de la particule, qui est défini comme la distance maximale entre deux droites parallèles entre lesquelles la particule peut géométriquement s'inscrire.

La fraction verre dudit calcin à résidus métalliques peut être par exemple du verre silico-sodo-calcique.

Typiquement, la composition chimique de la fraction verre dudit calcin à résidus métalliques comprend, en pourcentage massique :
- SiO2 : de 50 à 80%,
- Na2O: de 3 à 20%,
- CaO: de 3 à 20%,
- MgO : de 0 à 10%,
- Al2O3 : de 0 à 5%,
- K2O : de 0 à 10%, et
- Fe2O3 : de 0 à 15%.

Plus particulièrement, la composition chimique de la fraction verre dudit calcin à résidus métalliques peut comprendre, en pourcentage massique :
- SiO2 : de 50 à 80%,
- Na2O: de 5 à 20%,
- CaO: de 5 à 20%,
- MgO : de 1 à 10%,
- Al2O3 : de 0 à 5%,
- K2O : de 0 à 10%, et
- Fe2O3 : de 0 à 15%.

Plus particulièrement, la composition chimique de la fraction verre dudit calcin à résidus métalliques peut comprendre, en pourcentage massique :
- SiO2 : de 69 à 80%, de préférence de 70 à 75%,
- Na2O: de 8 à 20%, de préférence de 10 à 20%,
- CaO: de 5 à 20%, de préférence de 5 à 15%,
- MgO : de 1 à 10%, de préférence de 2 à 7%,
- Al2O3 : de 0 à 5%, de préférence de 0,5 à 3%,
- K2O : de 0 à 10%, de préférence de 0 à 2%, et
- Fe2O3 : de 0 à 15%, de préférence de 0 à 10%.

Dans certains modes de réalisation, le calcin à résidus métalliques est un calcin de laine de verre basse alumine comprenant des résidus métalliques, et la fraction verre dudit calcin à résidus métalliques a la composition chimique d'une laine de verre basse alumine telle que définie ci-dessus.

Dans certains modes de réalisation, le calcin à résidus métalliques est un calcin de laine de verre haute alumine comprenant des résidus métalliques, et la fraction verre dudit calcin à résidus métalliques a la composition chimique d'une laine de verre haute alumine telle que définie ci-dessus.

La fraction verre dudit calcin à résidus métalliques représente en général de 80 à 99,999%, par exemple de 95 à 99,99%, de 90 à 99,99%, de 90 à 99,95%, de 90 à 99,9%, de 93 à 99,9%, de 95 à 99,9%, de 95 à 99,5%, ou de 95 à 99%, de la masse dudit calcin à résidus métalliques.

Ledit calcin à résidus métalliques comprend 0,001 à 20 % en masse de résidus métalliques.

Avantageusement, ledit calcin à résidus métalliques comprend de 0,01 à 10 %, de préférence de 0,05 à 10 %, voire de 0,1 % à 10 %, voire de 0,1 % à 7 %, voire de 0,1 à 5% ou même de 0,5 à 5 %, par exemple de 1 à 5 %, en masse de résidus métalliques (par rapport à la masse totale dudit calcin à résidus métalliques).

Les résidus métalliques sont typiquement des éléments solides sous forme métal (ou semi-métal), et non oxydée. Les résidus métalliques peuvent tout particulièrement être à base de métaux de transition (e.g. fer, tantale), de métaux pauvres (e.g. plomb, cadmium, aluminium), de lanthanides, d'actinides, ou de semi-métaux (e.g. silicium). Il peut s'agir par exemples d'éléments constitutifs de cellules photovoltaïques (e.g. silicium), d'éléments constitutifs de l'armature du verre armé (e.g. fer), de polluants métalliques (e.g. aluminium), d'éléments issus de composants utilisés dans les technologies de couches minces (e.g. cuivre, argent, tellure, cadmium, indium, terres rares), d'éléments issus de peintures de verres décorés (e.g. plomb, cadmium) ou de miroir (e.g. argent, cuivre, aluminium, plomb).

Dans certains modes de réalisation, les résidus métalliques comprennent (par exemple, en une teneur massique d'au moins 70%, au moins 80%, au moins 90%, ou même au moins 95%, par rapport au poids total des résidus métalliques) un ou plusieurs éléments suivants choisis parmi : Si, Al, Fe, Te, Cd, In, Pb, Ta, Cu, Ag, Sc, Y, et un lanthanide.

Dans un mode de réalisation particulier, les résidus métalliques sont choisis parmi les éléments suivants : Si, AI, Fe, Te, Cd, In, Pb, Ta, Cu, Ag, Sc, Y, un lanthanide, et une combinaison d'au moins deux de ceux-ci.

Ledit calcin à résidus métalliques peut comprendre en outre des résidus de matières organiques. Ainsi, dans certains modes de réalisation, ledit calcin à résidus métalliques a une perte au feu (LOI), après séchage, de 0,001% à 20 %, par exemple de 0,01 à 15 %, de 0,05 à 10 %, ou de 0,1 à 5%.

La perte au feu LOI d'un calcin correspond à la variation de masse, exprimée en pourcentage en masse de matière sèche, résultant du chauffage du calcin jusqu'à 550°C. La perte au feu peut être déterminée conformément à la norme ISO/TR 12389 :2009. Plus particulièrement, la perte au feu LOI peut être définie comme le rapport (|M2-M1| / M1) x 100 (exprimée en %) où :
- M1 est la masse du calcin sec (typiquement obtenu après séchage du calcin à 105°C pendant au moins 3 heures), et
- M2 est la masse du calcin après chauffage du calcin sec à 550°C pendant au moins 3 heures. Lorsque le calcin n'est pas sous la forme d'une poudre, une étape de broyage est avantageusement mise en œuvre après l'étape de séchage (e.g. séchage à 105°C) et avant l'étape de chauffage à 550°C.

Avantageusement, ledit calcin à résidus métalliques est sous forme d'un composite conformé (par exemple, une briquette). Le composite conformé est typiquement formé à partir d'un mélange comprenant :
- de 1 à 99 %, de préférence de 1 à 25 %, voire de 5 à 20%, en masse dudit calcin à résidus métalliques,
- de 1 à 40 %, de préférence de 2 à 20 %, voire de 10 à 20%, en masse d'un liant, et
- de 0 à 98 %, de préférence de 55 à 97 %, voire de 60 à 85%, en masse de charges minérales, par rapport au poids total sec dudit mélange.

Il est bien entendu que, lorsque le calcin est sous la forme d'un composite conformé, les teneurs exprimées pour ledit ou par rapport audit calcin à résidus métalliques sont déterminés sur la base de la masse de calcin à résidus métalliques en tant que tel et non par rapport à la masse du composite conformé. Par exemple, une composition de matières premières de 100 g comprenant 50 g d'un composite conformé comprenant 10 g de calcin à résidus métalliques a une teneur en calcin à résidus métalliques de 10 % en masse.

Le liant du composite conformé a pour rôle d'assurer la cohésion de ce dernier. De tels liants sont bien connus de la personne du métier. Il peut s'agir d'un liant hydraulique, tel qu'un liant à base de ciment ou à base d'argile. Le ciment comprend généralement du clinker, et de préférence un ou plusieurs constituants choisis parmi du laitier de haut fourneau, du laitier d'aciérie, des cendres volantes, une pouzzolane, de la fumée de silice, du calcaire, et une argile calcinée. Le ciment peut par exemple être un ciment Portland, un ciment Portland composé, un ciment au laitier de haut fourneau, un ciment composé, un ciment pouzzolanique au laitier, un ciment de calcaire et d'argile calcinée, un ciment alumineux, un ciment sulfo-alumineux, un ciment sursulfaté, un ciment prompt, un ciment Sorel, ou un mélange de ceux-ci. Le ciment est avantageusement un ciment tel que défini par la norme EN 197-1 ou la norme EN 197-5. Dans certains modes de réalisation, les composants du liant ont un d50 inférieur à 200 µm, notamment inférieur à 100 µm.

Alternativement, le liant peut être à base d'une résine bi-composant (e.g. résine epoxy).

Les charges minérales du composite conformé peuvent être choisies parmi des matières minérales inertes vis-à-vis du liant, qui peuvent être des granulats utiles à la stabilité mécanique du composite conformé ou des composants utiles pour la charge vitrifiable. Les charges minérales (e.g. granulats) présentent généralement un d50 supérieur à 200 µm, notamment supérieur à 1 mm. Dans un mode particulier, les charges minérales sont choisies parmi un gravier, un laitier inerte (ou de manière équivalente « laitier non réactif »), et un mélange de ceux-ci.

Plus particulièrement, il peut s'agir de granulats provenant de filières industrielles de recyclage valorisant des sous-produits (ou coproduits) industriels ou issus de la démolition de bâtiments ou de voiries (broyats de bétons, briques, recyclage de ballasts de chemin de fer, de croûtes ou de fraisats de revêtements routiers ou de terrils miniers). Le laitier inerte en tant que charge minérale est grossier et ne forme pas particulièrement d'ions silicates en présence d'eau. Il est par ailleurs cristallin à plus de 20% de son poids et est de forte granulométrie avec un diamètre médian d50 supérieur à 50µm, par exemple un d50 supérieur à 200 µm, notamment supérieur à 1 mm. Il en est de même pour le gravier. Il peut s'agir notamment de laitiers LD issus de convertisseurs, que l'on fait solidifier sans traitement de trempe après leur prélèvement, ce par quoi ils cristallisent. Cette charge minérale est inerte, dans la mesure où elle ne participe pas à la chimie de la solidification du composite conformé.

Le composite conformé est formé par mélange des ingrédients précités (i.e. calcin à résidus métalliques, liant, charges minérales). Le mélange pour la préparation de la masse à mouler peut être réalisé dans tout malaxeur adapté. Il est généralement inutile de chauffer le mélange par apport de calories de l'extérieur au mélange. La température du mélange peut monter en raison de la solubilisation de certains ingrédients. Lorsque le liant est un liant hydraulique, de l'eau est introduite en suffisante quantité pour que le liant hydraulique se répartisse dans toute la masse à mouler mais insuffisamment de façon à ce que le composite conformé conserve sa forme au démoulage, le cas échéant après compaction. Généralement, l'eau est présente dans le mélange à raison de 2 à 30% en poids (de préférence, de 4 à 15% en poids), par rapport au poids total sec du mélange. Le pH du mélange est en général basique, typiquement au moins égal à 8 voire au moins égal à 10, ou même au moins égal à 11.

La masse à mouler obtenue par le mélange est ensuite transformée en composite conformé, notamment en briquettes, par moulage et éventuellement compaction. Notamment, la masse à mouler peut être mise dans un moule, vibrée pour éliminer l'air emprisonné, puis éventuellement compactée en appliquant une pression sur l'une des faces mobile du moule. Le composite conformé durcit ensuite naturellement. Il peut sécher avec le temps, de sorte que sa teneur en eau peut être fortement réduite avec le temps de stockage. Sa teneur en eau peut varier selon ses conditions de stockage.

Le composite conformé a généralement un volume supérieur à 1 cm³, voire supérieur à 20 cm³, notamment compris entre 100 et 1000 cm³.

Lorsque le calcin à résidus métalliques est utilisé sous forme d'un composite conformé, la teneur en ledit composite conformé dans la composition de matières premières est typiquement de 5 à 100 % en masse, de préférence de 15 à 70 %, voire de 20 à 60 % en masse, ou encore de 30 à 50 % en masse (par rapport au poids total de la composition de matières premières).

Lorsque le calcin à résidus métalliques est utilisé sous forme d'un composite conformé, le calcin à résidus métalliques a avantageusement un d50 de 1 à 40 mm, de préférence de 5 à 15 mm.

Lorsque le calcin à résidus métalliques est utilisé tel quel (i.e. qui n'est pas mis sous la forme de composite conformé), le calcin à résidus métalliques a avantageusement un d50 de 40 à 150 mm, de préférence de 80 à 120 mm.

La composition de matières premières peut comprendre à la fois :
- du calcin à résidus métalliques sous forme de composite conformé (« C1 »), tel que défini ci-dessus, et
- du calcin à résidus métalliques utilisé tel quel (i.e. qui n'est pas mis sous la forme de composite conformé) (« C2 »), tel que défini ci-dessus.

Dans ce cas, la teneur en calcin C1 dans la composition de matières premières est typiquement de 5 à 70 %, voire de 20 à 60 % en masse, ou encore de 30 à 50 % en masse (par rapport au poids total de la composition de matières premières) ; et la teneur en calcin C2 est typiquement de 1 à 50 %, voire de 3 à 30 % en masse, ou encore de 5 à 10 % en masse (par rapport au poids total de la composition de matières premières).

Le calcin C1 a avantageusement un d50 de 1 à 40 mm, de préférence de 5 à 15 mm. Le calcin C2 a avantageusement un d50 de 40 à 150 mm, de préférence de 80 à 120 mm.

La composition de matières premières comprend généralement en outre d'autres matières premières, telles que :
- des oxydes ou sels (e.g. le carbonate de sodium, la potasse, ou le borax),
- des matières premières naturelles (e.g. sables siliciques, dolomie, calcaire, scories, bauxite, feldspath, anorthosite, félithe), qui sont généralement des combinaisons d'oxydes,
- des déchets de laine minérale, notamment laine de verre et/ou de roche, qui peuvent être issus de la production desdites fibres ou de chantiers (construction ou déconstruction), et qui peuvent être associées à des films papier, à base d'aluminium ou bitumineux, ou des éléments de palettes en bois,
- des déchets de fibres minérales (du type de celles utilisées dans le renforcement),
- des combustibles liquides ou solides (e.g. plastique de matériau composite ou non, matières organiques, charbons),
- du calcin de verre plat ou calcin ménager (i.e. sans résidus métalliques),
- des matières recyclables issues de vitrages feuilletés avec des feuilles de polymère du type polyvinyle de butyral tels que des parebrises, et/ou
- des co-produits industriels (e.g. laitier de haut fourneaux, laitier de convertisseur, ...).

Lorsque le calcin à résidus métalliques est sous la forme d'un composite conformé, une ou plusieurs des matières premières (notamment choisies parmi celles mentionnées ci-dessus) utilisées pour former la composition de matières premières selon l'invention peuvent être également incluses dans le composite conformé.

Une méthode générale pouvant être mise en œuvre par un opérateur de four pour élaborer une composition de matières premières selon l'invention est détaillée ci-après.

Au cours d'une première étape, une composition cible qui satisfait les critères de viscosité pour être fondue et fibrée par centrifugation externe (mentionnés ci-dessus) est sélectionnée. Afin d'aider à la sélection de cette composition cible, un opérateur de four fait appel à des modèles mettant en relation la composition chimique et la viscosité dynamique d'un mélange, tels que ceux communément utilisés par les industries du verre. Dans un contexte industriel et de manière connue, d'autres considérations peuvent également être prises en compte dans la sélection de la composition cible, telles que le coût final de la composition, l'énergie requise pour la fusion de cette dernière, et le respect de certaines plages de concentration en composés chimiques.

Au cours d'une deuxième étape, l'opérateur élabore son mélange en prenant en compte la composition chimique respective de chacune des matières premières à sa disposition, et ajuste les proportions relatives de chacune de ces matières premières pour obtenir la composition cible.

Selon un mode de réalisation alternatif, un opérateur peut commencer par prendre en compte la composition respective de chacune des matières premières à sa disposition pour par la suite ajuster les proportions relatives de ces dernières et, de manière empirique, déterminer et obtenir une composition cible qui, sur la base des modèles à sa disposition, satisfait aux critères de viscosité pour être fibrée par centrifugation externe.

Un autre objet de la présente invention est un procédé de production d'un verre comprenant les étapes suivantes :
a) l'alimentation d'une enceinte de fusion avec une composition de matières premières telle que définie dans la présente demande, en tant que charge vitrifiable, et
b) la fusion dudit composite conformé dans ladite enceinte de fusion, pour obtenir un bain de matière fondue.

L'enceinte de fusion est avantageusement un four (typiquement vertical), configuré pour stratifier les matières premières en fusion, en fonction de leur densité, et avantageusement configuré pour soutirer les matières premières en fusion les plus denses, par sa partie basse.

Généralement, les matières premières en fusion se répartissent en plusieurs coupes, incluant notamment :
- une coupe intermédiaire comprenant le verre en fusion,
- une coupe comprenant les matières premières de haute densité, i.e. ayant une densité supérieure à celle de la coupe intermédiaire, typiquement supérieure d'au moins 4%, voire supérieure d'au moins 10%, par rapport à la densité de la coupe intermédiaire,
- une coupe comprenant les matières premières de faible densité, i.e. ayant une densité inférieure à celle de la coupe intermédiaire, typiquement inférieure d'au moins 4%, voire inférieure d'au moins 10%, par rapport à la densité de la coupe intermédiaire.

La fusion a typiquement lieu en conditions réductrices. Ces conditions réductrices sont typiquement permises par la présence de coke (qui n'est pas une matière première au sens de l'invention), qui est ajouté dans l'enceinte de fusion et est ainsi en contact avec les matières premières en fusion. De préférence, l'enceinte de fusion est un four cubilot.

Au cours du procédé de l'invention, les matières premières en fusion les plus denses sont éliminées par soutirage, par la partie basse de l'enceinte de fusion. Des matières premières en fusion de faible densité peuvent être en surface du bain de matière fondue, et être éventuellement éliminées par écrémage.

En sortie d'enceinte de fusion, la composition fondue peut soit être immédiatement fibrée par centrifugation externe, soit être refroidie et transformée en calcin, pour être plus tard (de manière subséquente) de nouveau fondue et fibrée par centrifugation externe pour l'obtention d'une laine minérale.

Dans un mode de réalisation préféré, le procédé de production d'un verre selon l'invention comprend les étapes suivantes :
a) l'alimentation d'une enceinte de fusion, ladite enceinte de fusion étant un four cubilot, avec une composition de matières premières telle que définie dans la présente demande, en tant que charge vitrifiable, et
b) la fusion dudit composite conformé dans ladite enceinte de fusion, pour obtenir un bain de matière fondue,
dans lequel :
- ledit calcin comprend de 0,01 à 20 %, de préférence de 0,1 à 20%, en masse de résidus métalliques ; et/ou
- la teneur en lesdits résidus métalliques (i.e. provenant dudit calcin à résidus métalliques) est de 0,1 à 5% en masse, par rapport au poids total de la composition de matières premières.

Un autre objet de la présente invention est un procédé de fabrication d'une laine minérale, comprenant :
- les étapes a) et b) du procédé de production tel que décrit ci-dessus,
- une étape c) de fibrage dudit bain de matière fondue, de préférence par centrifugation externe.

Un autre objet de la présente invention est un verre obtenu par le procédé de production tel que défini dans la présente demande.

Un autre objet de la présente invention est une laine minérale obtenue par le procédé de fabrication tel que défini dans la présente demande.

Il est bien entendu que les différents aspects, modes de réalisation particuliers et préférés décrits ci-dessus pour la composition de matières premières s'appliquent également aux procédés de production d'un verre ou de fabrication d'une laine minérale qui utilisent un telle composition de matières premières.

D'autres caractéristiques et avantages de l'invention apparaîtront à la lumière des exemples suivants, qui sont donnés à titre purement illustratif et n'ont pas pour but de limiter la portée de l'invention, définie par les revendications annexées.

### EXEMPLES

La composition cible de laine de roche décrite dans le Tableau 1 ci-dessous a été sélectionnée par un opérateur de four.

**[Tableau 1]**

| Constituant | % massique |
|---|---|
| SiO2 | 42,05 |
| Al2O3 | 16,57 |
| CaO | 25,45 |
| MgO | 6,28 |
| Fe2O3 | 4,74 |
| Na2O | 1,26 |
| K2O | 1,34 |
| B2O3 | - |

Caractéristiques de la laine de roche cible :
Visco Tlog 1 = 1464°C
Visco Tlog 3 = 1110°C
Tlog1 - Tlog3 = 354°C

Afin d'obtenir cette composition cible, l'opérateur dispose comme matières premières notamment de dolomie, basalte, bauxite, feldspath, et de calcin à résidus métalliques. Les compositions de trois calcins à résidus métalliques sont détaillées dans le Tableau 2 ci-dessous. Le calcin 1 est un calcin de verre armé, le calcin 2 est un calcin de laine minérale haute alumine broyée comprenant des résidus métalliques, et le calcin 3 est un calcin de laine minérale basse alumine broyée comprenant des résidus métalliques (Liens métalliques notamment à base de fer pour le calcin 1 et surfaçage aluminium pour les calcins 2 et 3). Du coke a été utilisé comme combustible et agent réducteur.

**[Tableau 2]**

| | | Calcin 1 (%m.) | Calcin 2 (%m.) | Calcin 3 (%m.) |
|---|---|---|---|---|
| Fraction verre : | | 99,9 | 99,9 | 99,9 |
| Composition chimique (%m) | - SiO2 | 71,3 | 41 | 65,3 |
| | - Al2O3 | 1,3 | 23 | 2,1 |
| | - CaO | 9,7 | 14 | 8,1 |
| | - MgO | 3,9 | 2 | 2,4 |
| | - Fe2O3 | 0,02 | 5,5 | 0,1 |
| | - Na2O | 13,8 | 6 | 16,4 |
| | - K2O | - | 6 | 0,7 |
| | - B2O3 | - | - | 4,5 |
| Résidus métalliques : | | 0,1 | 0,1 | 0,1 |

Les calcins 2 et 3 ont été utilisés sous la forme d'un composite conformé. Le détail de la composition chimique, en pourcentages massiques (%m), de ces composites conformés est donnée dans le tableau 3 ci-après.

**[Tableau 3]**

| | Composite A | Composite B |
|---|---|---|
| - Basalte | 22 | 22 |
| - Dolomie | 26 | 26 |
| - Déchets de laine de verre haute alumine | 28 | 22 |
| - Ciment | 12 | 12 |
| - Calcin 2 | 12 | - |
| - Calcin 3 | - | 18 |

Les proportions massiques (%m) de chacune des matières premières ont été ajustées, telles que mentionnées dans le Tableau 4 ci-dessous, pour l'obtention de la composition cible. Les compositions de matières premières C1-C3 ont été fondues dans un four cubilot, et les éléments métalliques ont été éliminés par soutirage.

**[Tableau 4]**

| | C1 | C2 | C3 |
|---|---|---|---|
| Calcin 1 | 6 | - | - |
| Composite conformé A | - | 30 (3,6%)* | - |
| Composite conformé B | - | - | 30 (5,4%)* |
| Basalte | 48 | 60 | 53 |
| Bauxite | 9 | - | 5 |
| Dolomie | 30 | 10 | 12 |
| Feldspath | 7 | - | - |
| Visco T log 1 | 1454 | 1467 | 1459 |
| Visco T log 3 | 1100 | 1110 | 1100 |
| Tlog1 - Tlog3 | 354 | 358 | 359 |

| | | | |
|---|---|---|---|
| * teneur en calcin dans le mélange total de matières premières | | | |

Partant de chacune des compositions de calcin 1, 2, et 3, en y ajoutant des matières premières adaptées, il a ainsi été obtenu la composition cible de laines de roche. Il a été possible d'introduire des concentrations massiques en calcin à résidus métalliques de 3 à 12% dans le mélange vitrifiable, tout en satisfaisant les critères nécessaires à la fusion et au fibrage par centrifugation externe.

## Revendications

1. Procédé de production d'un verre comprenant les étapes suivantes :
a) l'alimentation d'une enceinte de fusion avec une composition de matières premières, en tant que charge vitrifiable, et
b) la fusion de ladite composition de matières premières dans ladite enceinte de fusion, pour obtenir un bain de matière fondue
**caractérisé en ce que** ladite composition de matières premières est une composition de matières premières adaptée pour être fondue et fibrée par centrifugation externe pour l'obtention d'une laine minérale, **caractérisée en ce qu'**elle comprend de 1 à 99% en masse d'un calcin comprenant :
- une fraction verre et
- 0,001 à 20 % en masse de résidus métalliques,
ladite enceinte de fusion étant un four cubilot.

2. Procédé de production d'un verre selon la revendication 1, **caractérisé en ce que** ladite composition de matières premières comprend de 2 à 70 %, de préférence de 2 à 50 %, voire même de 4 à 20%, ou encore de 5 à 15%, en masse dudit calcin.

3. Procédé de production d'un verre selon la revendication 1 ou 2, **caractérisé en ce que** la fraction verre dudit calcin a une composition chimique comprenant, en pourcentage massique :
- SiO2 : de 50 à 80%,
- Na2O: de 3 à 20%,
- CaO: de 3 à 20%,
- MgO : de 0 à 10%,
- Al2O3 : de 0 à 5%,
- K2O : de 0 à 10%, et
- Fe2O3 : de 0 à 15%.

4. Procédé de production d'un verre selon l'une quelconque des revendications 1 à 3, **caractérisé en ce que** ledit calcin comprend de 0,01 à 20 %, de préférence de 0,1 à 20%, en masse de résidus métalliques.

5. Procédé de production d'un verre selon l'une quelconque des revendications 1 à 4, **caractérisé en ce que** ladite composition de matières premières comprend au moins 0,08% en masse, de préférence de 0,1 à 5% en masse, de résidus métalliques par rapport au poids total de la composition de matières premières.

6. Procédé de production d'un verre selon l'une quelconque des revendications 1 à 5, **caractérisé en ce que** les résidus métalliques comprennent un ou plusieurs éléments choisis parmi : Si, Al, Fe, Te, Cd, In, Cu, Pb, Ta, Ag, Sc, Y, et un lanthanide.

7. Procédé de production d'un verre selon l'une quelconque des revendications 1 à 6, **caractérisé en ce que** ledit calcin a une perte au feu, après séchage, de 0,001 à 20 %.

8. Procédé de production d'un verre selon l'une quelconque des revendications 1 à 7, **caractérisé en ce que** ladite laine minérale présente une composition chimique comprenant, en pourcentages massiques :
SiO2 : 30 à 75%,
Al2O3 : 0 à 30%,
CaO+MgO : 5 à 45%,
Na2O+K2O : 0 à 20%,
Fe2O3 : 0 à 20%,
B2O3 : 0 à 14%.

9. Procédé de production d'un verre selon l'une quelconque des revendications 1 à 8, **caractérisé en ce que** ladite laine minérale présente une composition chimique comprenant, en pourcentages massiques :
SiO2 : 30 à 50%,
Al2O3 : 10 à 24%,
CaO+MgO : 20 à 45%,
Fe2O3 : 0 à 20%,
Na2O+K2O : 0 à 10%, et
B2O3 : 0 à 1%.

10. Procédé de production d'un verre selon l'une quelconque des revendications 1 à 9, **caractérisé en ce que** ledit calcin est sous forme d'un composite conformé formé à partir d'un mélange comprenant :
- de 1 à 99 %, de préférence de 1 à 25 %, voire de 5 à 20%, en masse dudit calcin comprenant de 0,001 à 20 % en masse de résidus métalliques,
- de 1 à 40 %, de préférence de 2 à 20 %, voire de 10 à 20%, en masse d'un liant, et
- de 0 à 98 %, de préférence de 55 à 97 %, voire de 60 à 85%, en masse de charges minérales, par rapport au poids total sec dudit mélange.

11. Procédé de fabrication d'une laine minérale, comprenant :
- les étapes a) et b) d'un procédé de production d'un verre tel que défini dans l'une quelconque des revendications 1 à 10, et
- une étape c) de fibrage dudit bain de matière fondue.

12. Verre obtenu par le procédé de production tel que défini dans l'une quelconque des revendications 1 à 10.

13. Laine minérale obtenue par le procédé de fabrication tel que défini dans la revendication 11.
